# FASCICULE DE BREVET EUROPEEN

(11) **EP 2 147 344 B1**
(45) Date de publication et mention de la délivrance du brevet: **20.04.2016**
(21) Numéro de dépôt: 08805780.7
(22) Date de dépôt: 14.05.2008
(51) Int. Cl.: G02B 6/44

(54) **CAPOT DE PROTECTION DE FIBRE OPTIQUE**
GLASFASERSCHUTZVERFAHREN
OPTICAL FIBRE PROTECTION HOOD

(30) Priorité: 14.05.2007 FR 0755069
(43) Date de publication de la demande: 27.01.2010
(73) Titulaire: Free, Paris 75008 (FR)
(72) Inventeur: FORTIER, Eric, F-77720 Aubepierre Ozouer Le Repos (FR)
(74) Mandataire: Dupuis-Latour, Dominique
(86) Numéro de dépôt international: PCT/FR2008/050832
(87) Numéro de publication internationale: WO 2008/149017

(56) Documents cités:
- EP-A- 0 844 504
- EP-A- 1 455 209
- EP-A- 1 626 300
- DE-A1- 3 900 021
- FR-A- 2 688 897
- FR-A- 2 793 564
- US-A- 5 659 650
- US-A- 5 668 911
- US-A1- 2005 220 435
- US-B1- 6 410 850

## Description

L'invention concerne le raccordement des fibres optiques et notamment la protection des fibres optiques.

Elle s'applique en particulier, mais non exclusivement, au raccordement de fibres optiques chez un particulier, notamment pour la fourniture de services de communication haut-débit.

On raccorde généralement des fibres optiques entre elles dans un boîtier, Lorsque ce raccordement a lieu, par exemple, chez un particulier, on raccorde une fibre appartenant à un réseau à une fibre reliée à des moyens de réception, de décodage et de traitement de signal haut débit ou très haut débit pour des applications de type internet, téléphonie, télévision etc... Chaque fibre optique est raccordée dans une zone de raccordement optique du boîtier. Cette zone est, par exemple, matérialisée par un connecteur. A cet effet, chaque fibre est munie, à son extrémité, d'un élément de connexion apte à coopérer avec le connecteur.

On connaît déjà dans l'état de la technique un capot de protection du connecteur et des éléments de connexion. Un tel capot recouvre le connecteur et les éléments de connexion. Il permet, d'une part, de cacher ta zone de raccordement optique du boîtier pour améliorer l'esthétique de l'ensemble et d'autre part, de protéger le connecteur et tes éléments de connexion d'éventuels chocs. Un tel ensemble est connu par exemple d'après le DE 3900021 A1.

Or, dans le cas où, de manière non intentionnelle, on sollicite violemment une des fibres raccordées au connecteur, par exemple sur un tronçon compris entre le boîtier et les moyens de réception, on risque d'endommager le connecteur et/ou l'élément de connexion correspondant à ladite fibre, par exemple, par arrachement du connecteur par rapport au boîtier.

La présente invention a pour but de protéger le connecteur et l'élément de connexion de la fibre optique dans le cas de la sollicitation de cette fibre.

A cet effet, l'invention a pour objet un ensemble de raccordement pour fibres optique du type général exposé au préambule de la revendication 1, correspondant au DE 3900021 A1 précité, et comportant les éléments énoncés à la partie caractérisante de la revendication 1.

Grâce à l'ensemble selon l'invention, la zone de raccordement, notamment le connecteur et/ou l'élément de connexion, ne risque plus d'être endommagée lorsque la fibre est sollicitée. En effet, les moyens de maintien permettent d'isoler la fibre, sur un tronçon de fibre compris entre les moyens de maintien et la zone de raccordement à l'égard d'une éventuelle sollicitation de la fibre générée en dehors de ce tronçon. Dans le cas où la fibre est sollicitée, les moyens de maintien évitent que la sollicitation de la fibre ne soit transmise à la zone de raccordement, notamment au connecteur et/ou à l'élément de connexion. Ainsi, les moyens de maintien ont une fonction d'absorption de la sollicitation en vue de la protection mécanique de la fibre.

On notera que l'ensemble est agencé de sorte qu'un premier tronçon de la ou chaque fibre s'étend localement suivant une première direction à partir de la zone de raccordement, les moyens de maintien étant agencés pour maintenir un deuxième tronçon de la fibre de sorte qu'il s'étend localement suivant une seconde direction différente de la première direction, de préférence perpendiculaire à la première.

Un tel agencement des moyens de maintien permet de mieux absorber une éventuelle sollicitation de la fibre. En effet, comme le deuxième tronçon s'étend localement suivant une seconde direction différente de la première, la sollicitation de la fibre n'est pas appliquée directement suivant la première direction. Ainsi, la sollicitation de la fibre sur la zone de raccordement, notamment sur le connecteur et/ou l'élément dé connexion, est moindre.

Les moyens de maintien comprennent pour la ou chaque fibre au moins un élément de maintien distal et au moins un élément de maintien intermédiaire interposé entre la zone de raccordement et l'élément distal.

L'élément de maintien intermédiaire permet, d'une part, d'absorber au moins en partie la sollicitation de la fibre et, d'autre part, de guider la fibre vers l'élément de maintien distal. De plus, l'élément de maintien intermédiaire permet, dans le cas où la sollicitation de la fibre est telle que l'élément distal est endommagé, de conserver l'élément intermédiaire apte à absorber une sollicitation postérieure en isolant un tronçon de la fibre compris entre la zone de raccordement et l'élément intermédiaire.

Les sous-revendications visent des formes de réalisation particulieres, avantageuses et subsidiaires.

L'invention sera mieux comprise à la lecture de la description qui va suivre, donnée uniquement à titre d'exemple non limitatif et faite en se référant aux dessins dans lesquels :
la figure 1 est une représentation schématique d'un réseau comprenant plusieurs ensembles selon l'invention ;
- la figure 2 est une vue en perspective d'un ensemble de raccordement selon un mode de réalisation de l'invention comprenant un boîtier et un capot de protection selon l'invention ;
- la figure 3 est une vue de dessus du boîtier de la figure 2 dépourvu de son couvercle de fermeture ;
- la figure 4 est une vue de dessous du boîtier de la figure 2 ;
- la figure 5 est une vue en perspective du boîtier de la figure 4;
- la figure 6 est une vue de dessous du boîtier de la figure 2 comprenant une fibre optique prenant appui sur des moyens d'appui définissant le rayon de courbure maximal ;
- la figure 7 est une vue de dessous du boîtier de la figure 2 comprenant une fibre optique prenant appui sur des moyens d'appui définissant le rayon de courbure minimal ;
- la figure 8 est une vue de dessous du boîtier de la figure 2 comprenant une fibre optique dans un deuxième agencement ;
- la figure 9 est une vue de dessous du boîtier de la figure 2 comprenant deux fibres optiques chacune dans un troisième agencement;
- la figure 10 est une vue de dessous de l'ensemble de la figure 2 dans lequel deux fibres optiques sont raccordées à la zone de raccordement dans une première disposition ;
- la figure 11 est une vue de dessous de l'ensemble de la figure 2 dans lequel deux fibres optiques, chacune dans un troisième agencement, sont raccordées à la zone de raccordement dans une deuxième disposition ;
- la figure 12 est une vue de dessus d'un capot de protection de l'ensemble de la figure 2.

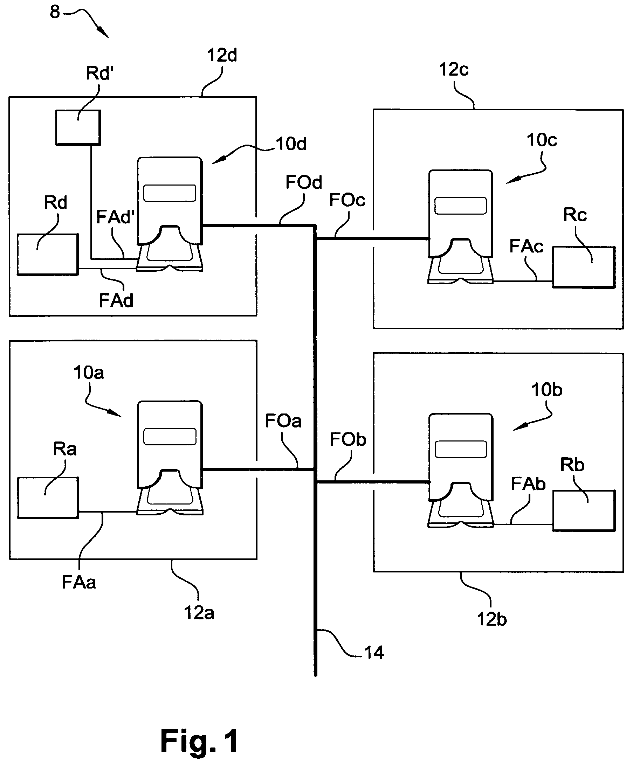

On a représenté sur la figure 1 un réseau de fibres optiques, désigné par la référence générale 8. En l'espèce, ce réseau 8 comprend quatre ensembles 9a, 9b, 9c, 9d selon l'invention, chaque ensemble comprenant quatre boîtiers 10a, 10b, 10c et 10d disposés dans des espaces respectifs 12a, 12b, 12c et 12d isolés les uns des autres. Chacun de ces espaces est, par exemple, une habitation. Le réseau 8 comprend des fibres optiques amont FOa, FOb, FOc et FOd. Chaque fibre optique amont FOa, FOb, FOc et FOd est raccordée au boîtier correspondant et relie ce boîtier à un faisceau commun 14 de fibres optiques amont. Les termes « amont » et « aval » servent ici à repérer les fibres par référence à un signal descendant, à savoir un signal pénétrant dans l'habitation depuis le faisceau 14.

Chaque boîtier 10a, 10b, 10c, 10d est respectivement relié, grâce à une fibre optique aval respectivement référencée FAa, FAb, FAc et FAd, à un récepteur Ra, Rb, Rc et Rd, par exemple un modem. L'espace 12d comprend de plus, un deuxième récepteur Rd' relié au boîtier 10d grâce à une deuxième fibre aval FAd'. Ces récepteurs peuvent comprendre par exemple des moyens de réception, de décodage et de traitement de signal haut débit ou très haut débit pour des applications de type internet, téléphonie, télévision etc. au sein de l'habitation.

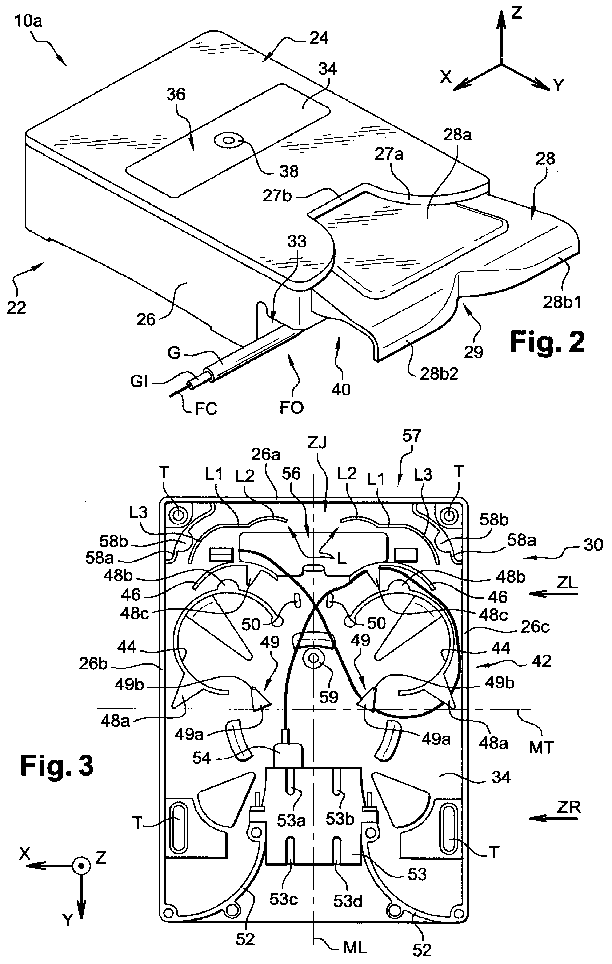

On a représenté sur la figure 2 l'ensemble 9a comprenant le boîtier 10a. Sur les figures 2 à 11, le boîtier 10a ayant une forme générale parallélépipédique rectangle, on a représenté des axes X, Y, Z orthogonaux entre eux correspondant aux orientations longitudinale Y, transversale X et verticale Z du boîtier tel qu'illustré.

Ce boîtier comprend un corps 22 recouvert par un couvercle de fermeture 24. Le corps 22 comprend trois parois périphériques 26 séparant l'extérieur et l'intérieur du boîtier. On distingue parmi celles-ci une paroi transversale 26a parallèle au plan XZ et deux parois longitudinales 26b et 26c parallèles entre elles et au plan YZ et perpendiculaires à la paroi 26a pour former avec celle-ci une configuration en « U ».

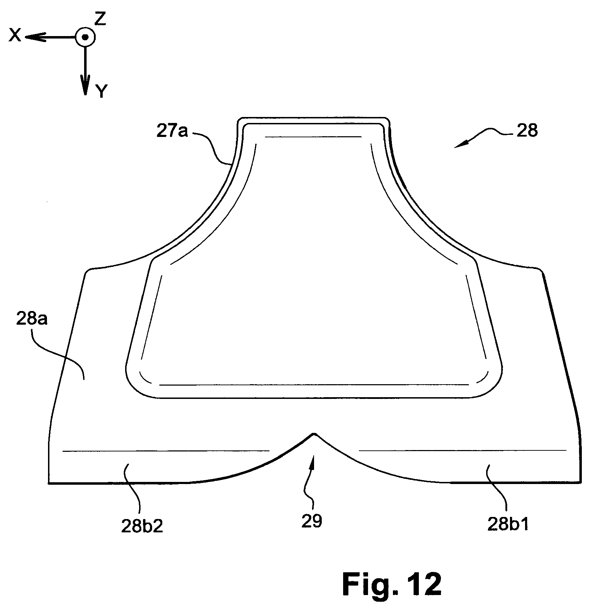

L'ensemble 9a comprend également un capot de protection 28 ou « casquette » rapporté de façon amovible au boîtier 10a. Comme représenté également sur la figure 12, le capot présente, dans le plan XY, une forme générale de T inversé. Ainsi, le capot 28 comporte une portion 27a présentant une forme complémentaire de la forme d'une portion 27b du boîtier 10a dans le plan XY. En l'espèce, ces portions sont aptes à réaliser un assemblage de type mâle-femelle. Le capot 28 présente une paroi principale plane 28a parallèle au plan XY, tout comme le couvercle 24, et deux parois d'appui 28b1, 28b2 pour une fibre optique. Les parois 28b1, 28b2 sont courbes en ayant chacune une forme de portion cylindrique. La génératrice de chaque paroi 28b1, 28b2 est sensiblement perpendiculaire à la paroi principale 28a. Les parois d'appui 28b1, 28b2 s'étendent aux bords respectifs d'une échancrure inférieure 29 de la paroi principale 28a.

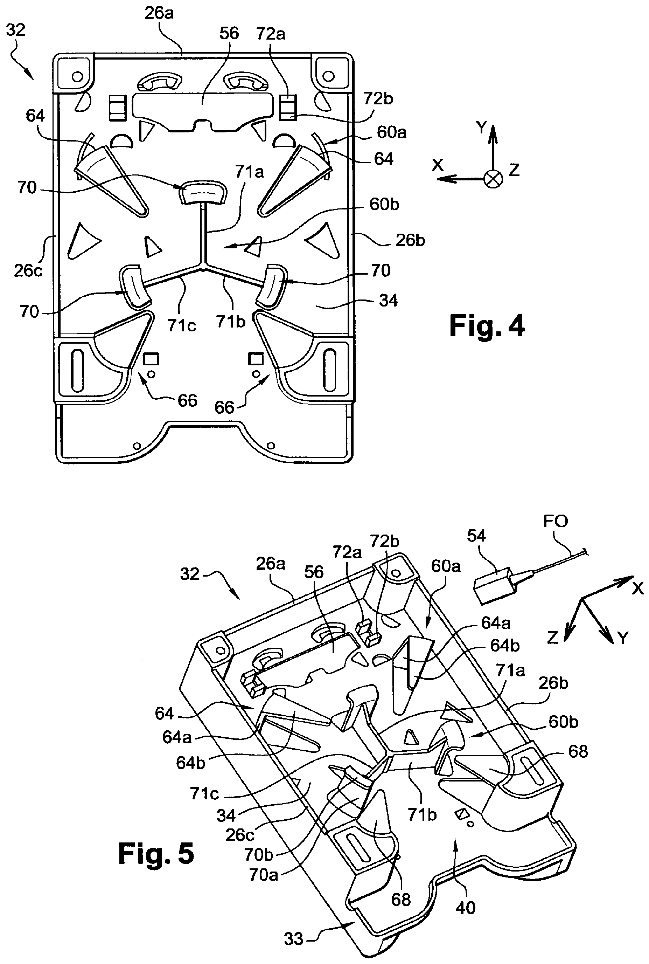

Le boîtier 10a comprend un premier compartiment 30 représenté en détail sur les figures 3, 8 et 9. Le boîtier 10a comprend également un deuxième compartiment 32 représenté en détail sur les figures 4, 5, 6, 7, 10 et 11. Les premier et deuxième compartiments 30, 32 sont séparés par un fond 34. Un décrochement 33 permet au premier compartiment 30 de s'étendre au delà du deuxième compartiment 32.

Le couvercle 24 comprend une vitre transparente d'identification 34 du boîtier 10a recouvrant un espace d'identification 36 destiné à recevoir, par exemple, une étiquette. Un trou 38 pour une vis est ménagé dans le couvercle 24 en regard de la vitre 34 d'identification.

De plus, le boîtier 10a comprend une zone d'entrée 40, située dans le décrochement 33, et destinée à l'entrée de la fibre optique FO à l'intérieur du boîtier. Comme visible sur les figures 4 et 5, la zone d'entrée 40 permet de recevoir un ou plusieurs câble des deux côtés du boîtier. Cette dernière comprend une gaine externe principale G et une gaine intermédiaire GI qui entoure la fibre optiquement conductrice FC. Cette dernière présente un diamètre de 250 µm environ. La gaine intermédiaire a ici un diamètre d'environ 900 µm. Dans l'exemple représenté, la fibre optique a un diamètre total de 2 mm environ. Sur les figures 3, 8 et 9, on a représenté l'agencement, dans le premier compartiment 30, de la fibre FO démunie des gaines principales et intermédiaires. La description de son agencement dans le deuxième compartiment 32 sera faite plus loin dans la présente description.

On distingue dans le premier compartiment des zones supérieure et inférieure disposées de part et d'autre d'un plan médian transversal MT du boîtier sensiblement parallèle au plan XZ. Précisément, le premier compartiment 30 comprend une zone de lovage ZL de la fibre optique FO, correspondant sensiblement à la partie supérieure du boîtier 10a. En outre, il comprend une zone de raccordement ZR de la fibre FO et d'une autre fibre optique FA, correspondant sensiblement à la partie inférieure du boîtier 10a.

La zone de lovage ZL comprend des moyens de guidage 42 de la fibre optique FO, agencés hors de la zone ZR de raccordement.

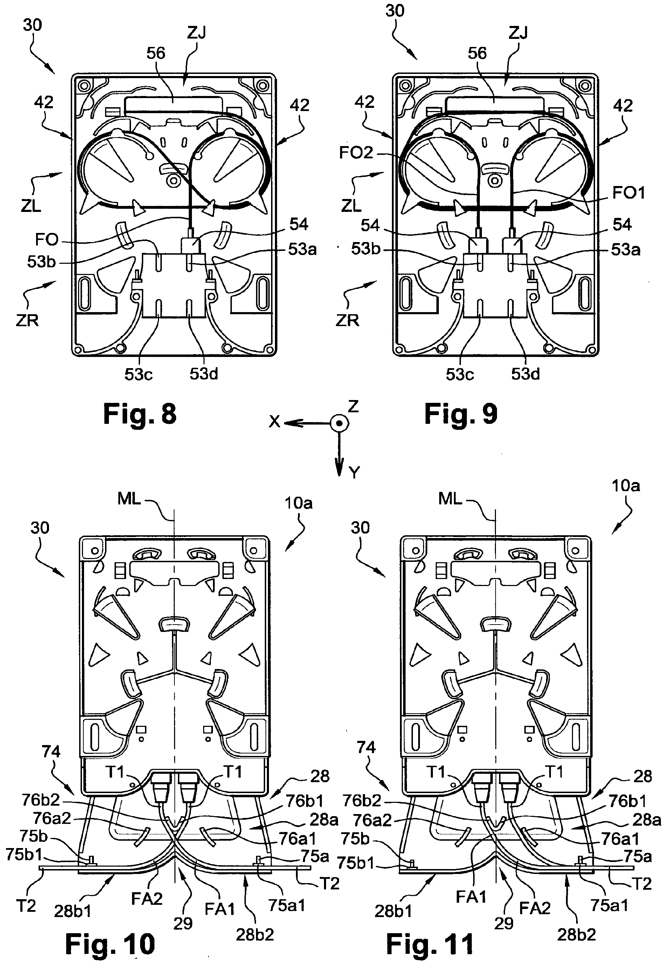

Comme cela est également représenté sur la figure 8, les moyens 42 de guidage sont agencés pour permettre de disposer la fibre FO de sorte que son sens d'enroulement change le long de la fibre FO. Dans le cas où le premier compartiment 30 comprend deux fibres FO1 et FO2, comme cela est représenté sur la figure 9, les fibres FO1 et FO2 sont disposées autour des moyens de guidage 42 de sorte que chaque fibre FO1, FO2 a un sens d'enroulement qui change le long de la fibre FO1, FO2. Comme illustré sur les figures 3, 8 et 9, les moyens 42 de guidage sont agencés pour permettre de disposer chaque fibre FO, FO1, FO2 de sorte que chaque fibre FO, FO1, FO2 se croise au moins une fois.

Dans l'exemple représenté sur les figures, les moyens 42 de guidage comprennent deux tambours partiels cylindriques 44 de lovage. Chaque tambour 44 s'étend en l'espèce sur deux tiers de tour. L'ouverture de chaque tambour 44 s'étend sur la portion du tambour 44 la plus proche du centre géométrique du boîtier. Les tambours 44 sont agencés sensiblement symétriquement par rapport à un plan médian longitudinal ML du boîtier parallèle au plan YZ. De plus, les moyens 42 de guidage comprennent des arcs de guidage 46, s'étendant ici sur un cinquième de tour environ. Les arcs 46 sont interposés entre la paroi 26a et les tambours 44 respectifs, le centre de courbure de chaque arc se trouvant du coté de l'arc 46 associé au tambour 44. Les tambours 44 et les arcs 46 font saillie suivant la direction Z par rapport au fond 34 du boîtier 10a. Les tambours 44 et les arcs 46 sont agencés pour donner à la fibre FO un rayon de courbure supérieur à un rayon de courbure prédéterminé, et à cette fin ont en l'espèce un rayon supérieur à ce rayon prédéterminé. Ce dernier dépend essentiellement des caractéristiques techniques de la fibre optique FO utilisée.

De plus, les moyens de guidage 42 comprennent des pattes 48 de maintien vertical de la fibre FO agencés sur chaque tambour 44 et chaque arc 46. Les pattes 48 s'étendent sensiblement parallèlement au fond 34 du boîtier 10a. Chacune des pattes des tambours et des arcs s'étend à partir du bord du tambour ou de l'arc opposé au bord adjacent au fond. Chaque tambour 44 comporte une patte 48a située sur une partie du tambour 44 proche du plan MT. Chaque patte 48a présente une forme générale triangulaire dont la pointe est dirigée respectivement vers la parois 26b et 26c. Chaque tambour 44 comporte également une patte 48b située sur une partie du tambour 44 faisant face à la paroi 26a. Chaque patte 48b présente une forme générale semi circulaire et s'étend vers la paroi 26a. Enfin, chaque arc 46 comporte une patte 48c située sur une partie de l'arc proche du plan ML. Chaque patte 48c a une forme générale triangulaire similaire aux pattes 48a et pointe en direction du plan MT.

De plus, les moyens de guidage 42 comprennent des plots 49 formant cornière agencés en regard de l'ouverture de chaque tambour 44. Chaque plot 49 comprend un pied 49a faisant saillie par rapport au fond 34 suivant la direction Z et une patte 49b de forme générale triangulaire formant la partie repliée de la cornière 49 et s'étendant parallèlement au fond 34 du boîtier 10a. Chaque plot 49 est orienté de façon que la patte repliée de chaque plot 49 pointe vers l'ouverture du tambour 44 correspondant.

En outre, les moyens de guidage 42 comprennent des plots de guidage 50. Ces plots 50 font saillie par rapport au fond 34 suivant la direction Z. Ces plots 50 sont destinés au passage de la fibre FO lorsque celle-ci ne change pas de sens le long de la fibre FA entre l'arc 46 et la zone ZR de raccordement.

Comme illustré sur les figures 3, 8 et 9, la zone ZR de raccordement comporte une zone ZA pour accéder depuis l'extérieur du boîtier à la zone ZR de raccordement. Cette zone ZA a une forme générale évasée s'élargissant en s'éloignant de la zone ZR de raccordement suivant la direction Y. La zone ZA est délimité par deux parois arquées 52. Précisément, chaque paroi a une forme cylindrique et couvre environ un quart de tour. L'axe du cylindre est parallèle à la direction Z. Chaque paroi s'étend depuis l'intérieur du boîtier vers l'extérieur jusqu'à l'un des coins du boîtier, en s'éloignant du plan médian ML. Le centre de courbure de la paroi est situé du coté de la paroi opposé à la zone ZA.

Dans la zone ZR de raccordement, le boîtier est ici équipé de moyens de connexion 53 des fibres FO et FA, formés ici par un double connecteur. Ces moyens 53 de connexion comprennent deux orifices de connexion 53a, 53b pour le raccordement d'une ou deux fibres FO et deux orifices de connexion 53c, 53d pour le raccordement d'une ou deux fibres FA. Pour connecter chaque fibre à l'orifice correspondant, chaque fibre FO, FA est munie d'un élément de connexion 54.

Le fond 34 présente une ouverture de passage 56 permettant le passage de la fibre FO munie de l'élément 54 de connexion de l'un à l'autre des deux compartiments 30 et 32.

Toutefois, dans le cas où l'on doit réaliser une épissure entre deux tronçons d'extrémité de fibres (si l'on doit prolonger la fibre par exemple), le premier compartiment 30 comprend des moyens de maintien 57 d'une extrémité de chaque portion de la fibre de part et d'autre d'une zone de jonction ZJ. Cette zone ZJ de jonction est apte à recevoir une épissure des deux extrémités. En l'espèce, les moyens de maintien comprennent deux languettes élastiques L. Chaque languette L est située entre l'ouverture 56 et la paroi 26a, les languettes étant symétriques l'une de l'autre par rapport au plan ML. Chaque languette fait saillie par rapport au fond 34 suivant la direction Z et comprend une partie fixe L1 venue de matière avec le fond 34 et sensiblement parallèle à la paroi 26a. Chaque languette L comprend également une partie élastique L2, prolongeant la partie fixe L1 vers l'axe ML, mais non reliée au fond 34. Chaque partie L2 présente une forme générale d'arc dont le centre de courbure se trouve du côté de l'arc où se trouve l'ouverture de passage 56. La face bombée de la partie L2 fait face à la paroi 26a et est distante de cette dernière d'une distance inférieure au diamètre de la gaine externe de la fibre FO. Elle est ici inférieure à 2 mm.

Le boîtier comprend également des moyens de guidage 58 formant un couloir de guidage. Ces moyens 58 comprennent des parois arquées 58a agencées symétriquement par rapport au plan ML à proximité des coins supérieurs C1, C2 correspondant du boîtier 10a. Chaque paroi 58a s'étend respectivement entre les parois 26a et 26b et entre les parois 26a et 26c. Le centre de courbure de chaque paroi 58a se trouve du côté de la parois situé face au centre du boîtier 10a. Chaque paroi 58a comporte une patte de maintien vertical 58b similaire aux pattes 48b et s'étendant en direction du centre du boîtier 10a. Les moyens 58 comportent, en regard de chaque paroi 58a, une partie fixe L3 arquée prolongeant la partie fixe L et sensiblement parallèle à la paroi 58a.

Enfin, le premier compartiment comprend des moyens de fixation du boîtier sur un support tel qu'un mur. Ces moyens de fixations comprennent des trous T agencés dans les quatre coins du premier compartiment 30.

En outre, un trou fileté 59 permet la fixation du couvercle 24 au corps 22 du boîtier 10a.

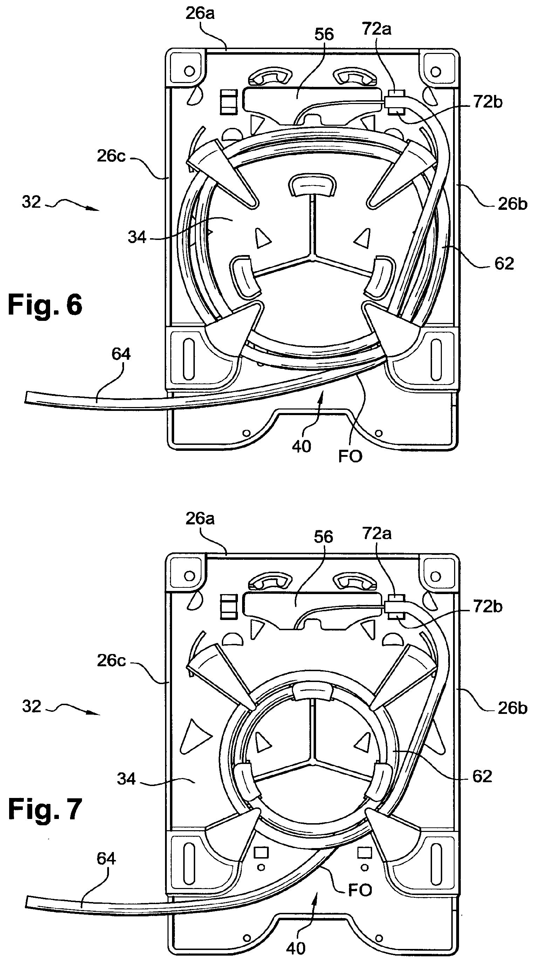

Comme représenté sur les figures 4 à 7 et 10 à 11, le deuxième compartiment 32 comprend des moyens d'appui 60a, 60b pour des spires 62 de la fibre FO. Le deuxième compartiment 32 est agencé de sorte qu'il permet de modifier le rayon de courbure des spires 62 en déplaçant le boîtier 10a par rapport à une portion 64 de la fibre FO située à l'extérieur du boîtier 10a comme cela est illustré sur les figures 6 et 7 sur lesquelles la fibre FO est gainée par la gaine G.

Ces moyens 60a, 60b d'appui définissent un rayon de courbure minimal des spires 62 ainsi qu'un rayon de courbure maximal des spires 62. En l'espèce, les moyens 60a d'appui définissant le rayon de courbure maximal des spires 62 sont distincts des parois périphériques 26. Les moyens 60a comprennent des pattes 64 formant cornière ainsi que deux paires d'arêtes 66 du boîtier, les paires étant symétriques par rapport au plan moyen longitudinal du boîtier 10a. Les arêtes sont parallèles à la direction Z. Chaque paire d'arêtes forme les bords d'une paroi en tronçon de cylindre d'axe parallèle à la direction Z et de centre de courbure situé du même côté de la paroi que le centre du boîtier. Ces quatre éléments 64, 66 sont répartis autour du centre du boîtier. Les pattes 64 comprennent chacune un pied 64a essentiellement plan en saillie du fond suivant la direction Z, et un ergot plan 64b parallèle au fond, de forme triangulaire, dont la pointe est dirigée vers le centre du boîtier. Les arêtes 66 sont prolongées de même par des ergots 68 de maintien vertical de la fibre FO, sensiblement parallèles au fond 34 et dirigés vers le centre.

Les moyens 60b d'appui définissant le rayon de courbure minimal de la spire 62 comprennent des pattes 70 formant cornière agencées en étoile autour du centre du boîtier et reliées entre elles par trois nervures concourantes 71 a, 71 b, 71 c parallèle à la direction Z. Les pattes 70 comprennent un pied 70a à partir duquel s'étend un court ergot 70b orienté en direction opposée au centre du boîtier.

Dans l'exemple illustré sur les figures, le rapport du rayon de courbure maximal sur le rayon minimal est supérieur ou égal à 1,3. Dans certaines zones du deuxième compartiment 32, ce rapport est préférentiellement supérieur à 1,7.

En effet, on notera que les moyens d'appui 60a, 60b définissant des rayons de courbures maximal et minimal de la fibre FO pouvant varier d'un endroit à l'autre du compartiment, le rapport des rayons de courbure n'est, en l'espèce, pas constant dans l'espace. Dans l'exemple représenté sur les figures, le rapport moyen des rayons de courbure est de 1,5.

Le deuxième compartiment 32 comprend des moyens d'immobilisation rigide 72 interposés entre les moyens d'appui 60a, 60b et la zone de raccordement ZR.

En l'espèce, les moyens 72 d'immobilisation rigide comprennent chacun deux pattes élastiques 72a, 72b situées en regard l'une de l'autre et aptes à serrer entre elles une fibre munie de sa gaine. Comme représenté sur les figures 6 et 7, on peut prévoir que la gaine G s'interrompt au niveau des moyens 72. Ainsi, la fibre FO est dépourvue de la gaine G en aval des moyens 72.

Dans le deuxième compartiment 32, le boîtier 10a est dépourvu de moyens d'immobilisation rigide de la fibre FO par rapport au boîtier 10a, entre les moyens d'appui 60a, 60b et la zone d'entrée 40 de la fibre FO dans le boîtier 10a.

Comme cela est illustré sur les figures 10 et 11, le capot 28 porte des moyens de maintien 74 de la fibre hors de la zone ZR de raccordement. Ces moyens de maintien 74 sont donc portés par le boîtier 10a. La zone ZR de raccordement est interposée entre les moyens d'appui 60a, 60b du premier compartiment 30 dans lesquels sont agencés les fibres FO et les moyens de maintien 74.

Ces moyens 74 de maintien s'étendent hors du boîtier 10a. Dans les deux exemples représentés aux figures 10 et 11, les moyens de maintien 74 comprennent, d'une part, des éléments de maintien distaux 75a, 75b et, d'autre part, des éléments de maintien intermédiaires 76a1, 76a2, 76b1, 76b2, interposés entre la zone de raccordement et les éléments distaux. Chaque fibre FA1, FA2, maintenue par ces moyens 74, est connectée dans la zone de raccordement ZR. Un premier tronçon T1 de chaque fibre s'étend localement suivant une première direction sensiblement parallèle à la direction X à partir de cette zone de raccordement. Les éléments distaux 75a, 75b sont agencés de sorte qu'un deuxième tronçon T2 de chaque fibre situé en aval du premier et en l'espèce, à distance de ce dernier, s'étend localement suivant une seconde direction sensiblement parallèle à la direction Y et donc perpendiculaire à la première direction. Le terme aval sert ici à repérer les tronçons de fibres par référence à un signal descendant, à savoir un signal sortant du boîtier par les fibres FA1, FA2 vers le récepteur Ra.

Comme représenté sur les figures 10 et 11, les moyens 74, et notamment les éléments intermédiaires 76a1, 76a2, 76b1, 76b2 sont agencés de sorte que les tronçons T2 des deux fibres FA1, FA2 distants de la zone de raccordement s'étendent localement au choix de l'utilisateur suivant deux directions différentes. En effet, dans le cas représenté sur la figure 10, les deux tronçons T2 s'étendent suivant deux directions différentes en étant parallèle l'un à l'autre alors que dans le cas représenté sur la figure 11, les deux tronçons T2 s'étendent suivant la même direction. Dans une autre variante, les éléments intermédiaires pourront être agencés de sorte que les deux tronçons T2 ne peuvent que s'étendre suivant deux directions différentes. Dans encore une autre variante, les éléments intermédiaires pourront être agencés de sorte que les deux tronçons T2 ne peuvent que s'étendre suivant la même direction.

On notera que, comme cela est représenté à la figure 10, les moyens de maintien 74 sont agencés de sorte que les deux fibres FA1, FA2 raccordées au boîtier se croisent.

Les éléments intermédiaires 76a1, 76a2, 76b1, 76b2 forment des plots faisant saillies par rapport au capot 28 dans la direction Z.

En l'espèce, les plots 76a1, 76a2, 76b1, 76b2 comprennent deux paires de plots 76a1, 76a2 et 76b1, 76b2 symétriques par rapport au plan ML. Les plots 76a1, 76a2 sont inclinés par rapport au plan ML de sorte qu'ils s'écartent de ce plan ML lorsque l'on s'éloigne de la zone de raccordement. Au contraire, les plots 76b1, 76b2 sont inclinés par rapport au plan ML se sorte qu'ils se rapprochent de ce plan ML lorsqu'on s'éloigne de la zone de raccordement. Les plots 76b1, 76b2 sont concourants au niveau du plan ML alors que les plots 76a1, 76a2 sont disposés de part et d'autre des plots 76b1, 76b2.

Les parois d'appui 28b1, 28b2 sont courbées de façon à donner à chaque fibre FA1, FA2 un rayon de courbure supérieur à un rayon de courbure prédéterminé. Le centre de courbure de chaque paroi est situé du côté de cette paroi où se trouve le boîtier.

Enfin, chaque élément distal 75a, 75b comprend un crochet de retenue de chaque fibre optique FA1, FA2. Chaque crochet comprend une extrémité libre 75a1, 75b1 dirigée vers la face intérieure de la paroi principale. L'espace ménagé entre cette extrémité et la paroi 28a permet d'introduire la fibre dans le logement formé par le crochet.

L'ensemble, et notamment le capot 28, pourra être réalisé dans différents matériaux notamment en matière plastique, par exemple en polypropylène.

L'ensemble 9a permet de raccorder les fibres optiques FA et FO conformément au procédé dont on précisera ci-dessous les principaux aspects liés à l'invention.

Pour mettre en oeuvre ce procédé, on dispose de la fibre FO munie de son élément de connexion 54 provenant du faisceau de fibre 14. Cette fibre FO est gainée dans la gaine G comme représenté sur la figure 2. On fait pénétrer cette fibre FO gainée dans le boîtier 10a par l'entrée 40.

On forme alors les spires 62 dans le boîtier 10a avec la fibre FO comme cela est représenté sur la figure 6, entre les moyens 60a et 60b. On formera le plus souvent les spires 62 sans prendre appui sur les moyens d'appui 60a ou 60b de sorte que les spires 62 présentent un rayon de courbure intermédiaire entre les rayons maximal et minimal.

Puis on fixe rigidement une partie 82 de la fibre FO gainée au boîtier 10a grâce aux moyens 72.

On fait alors passer la fibre FO munie de l'élément de connexion 54 du premier compartiment 30 au deuxième compartiment 32 en la faisant passer au travers de l'ouverture 56.

On love la fibre FO dans les moyens 42, le cas échéant en croisant la fibre FO et/ou en changeant son sens d'enroulement, de façon à connecter la fibre FO sur l'orifice de connexion 53a comme cela est représenté sur la figure 3.

Puis, on déplace le boîtier par rapport à la portion 64 de la fibre FO située à l'extérieur du boîtier 10a de sorte que le rayon de courbure des spires 62 varie entre les rayons de courbure minimal et maximal définis par les moyens d'appui 60a, 60b. Par exemple, on augmente la longueur de fibre FO à l'extérieur du boîtier 10a de sorte qu'on resserre les spires 62. Il est possible que les spires prennent alors appui sur les moyens 60b comme cela est représenté sur la figure 7. Inversement, on diminue la longueur de fibre FO à l'extérieur du boîtier 10a de sorte qu'on étend les spires 62. Il est possible que les spires prennent alors appui sur les moyens 60a comme cela est représenté sur la figure 6.

Une fois l'emplacement choisi, on fixe le boîtier 10a sur une paroi, par exemple, au moyen de quatre vis que l'on visse dans les orifices T.

Dans ce mode de mise en oeuvre, on effectue le raccordement optique de la fibre FO avec la fibre FA dans la zone ZR après avoir déplacé le boîtier 10a. En l'espèce, on raccorde la fibre FA en la connectant dans l'orifice 53c. En variante, on effectue le raccordement optiques de la fibre FO avec la fibre FA avant d'avoir déplacer le boîtier 10a.

Puis, on obture le premier compartiment 30 avec le couvercle 24 et on fixe directement au boîtier la casquette 28. On dispose alors chaque fibre FA1, FA2 dans les moyens 74 de sorte que chaque fibre FA1, FA2 est maintenue hors du boîtier et hors de la zone de raccordement. On choisit les éléments de maintien 76a1, 76a2, 76b1, 76b2 en fonction de la direction dans laquelle on souhaite diriger la fibre FA.

L'invention ne se limite pas aux modes de réalisations décrits.

En effet, les fibres FA et FO pourront indépendamment être gainées ou non gainées dans le premier et deuxième compartiments 30, 32.

En outre, on pourra introduire deux fibres FA et former des spires 62 de chaque fibre FA introduite dans le boîtier 10a.

Le capot 28 pourra présenter différentes formes permettant de conserver les fonctions des moyens de maintien décrites ci-dessus.

De plus, le capot 28 pourra être d'une seule pièce avec le couvercle ou bien d'une seule pièce avec le boîtier.

## Revendications

1. Ensemble (9a-d) de raccordement pour fibres optiques, comprenant :
- un boîtier (10a-d), comprenant des moyens de raccordement d'au moins une fibre optique (FA1 , FA2) situés dans une zone de raccordement optique (ZR) du boîtier, et
- un capot (28) rapporté, monté de manière amovible sur le boîtier, ce capot comportant des moyens de maintien (74) de la fibre optique s'étendant hors du boîtier (10a-d) et hors de la zone de raccordement, agencés de telle sorte qu'un premier tronçon (T1) de la fibre s'étende localement suivant une première direction à partir de la zone de raccordement et un deuxième tronçon (T2) de la fibre s'étende localement suivant une seconde direction différente de la première direction,
**caractérisé en ce que** les moyens de maintien comprennent pour chaque fibre optique :
- au moins un élément de maintien distal (75a, 75b) comprenant un crochet (75a1, 75b1) de retenue de la fibre optique, et
- au moins un élément de maintien intermédiaire (76a1, 76a2, 76b1, 76b2), interposé entre la zone de raccordement (ZR) et l'élément distal (75a, 75b), apte à guider la fibre vers l'élément de maintien distal,
de manière que les éléments d'appui distal et intermédiaire isolent la fibre, sur ledit deuxième tronçon de fibre s'étendant entre les moyens de maintien et la zone de raccordement, à l'égard d'une éventuelle sollicitation de la fibre générée en dehors de ce tronçon, évitant ainsi que la sollicitation de la fibre ne soit transmise à la zone de raccordement.

2. L'ensemble de la revendication 1, dans lequel le capot comporte une paroi principale (28a) et au moins une paroi d'appui de fibre (28b1, 28b2), non parallèle à la paroi principale.

3. L'ensemble de la revendication 2, dans lequel le crochet de retenue de fibre de l'élément de maintien distal comprend une extrémité libre (75a1, 75b1) dirigée vers la face intérieure de la paroi principale du capot, de manière à ménager entre cette extrémité libre et la paroi principale du capot un espace permettant d'introduire la fibre dans le logement formé par le crochet.

4. L'ensemble de la revendication 2, dans lequel la paroi d'appui de fibre est en forme de portion cylindrique de génératrice, perpendiculaire à la paroi principale et courbée de façon à donner à chaque fibre un rayon de courbure supérieur à un rayon de courbure prédéterminé.

5. L'ensemble de la revendication 4, comprenant deux parois d'appui de fibre symétriques s'étendant jusqu'aux bords respectifs d' une échancrure (29) de la paroi principale.

6. L'ensemble de la revendication 1, dans lequel les éléments de maintien intermédiaire comprennent des paires de plots faisant saillie par rapport au capot et symétriques par rapport au plan médian (ML) du boîtier, avec :
- des premiers plots (76b1, 76b2), concourants au niveau du plan médian et inclinés par rapport à ce plan médian en se rapprochant de ce plan dans le sens de l'éloignement de la zone de raccordement, et
- des seconds plots (76a1, 76a2), disposés de part et d'autre des premiers plots, et inclinés par rapport au plan médian en s'écartant de ce plan dans le sens de l'éloignement de la zone de raccordement.

7. L'ensemble de la revendication 1, dans lequel le boîtier comporte, pour accéder depuis l'extérieur du boîtier à la zone de raccordement optique, une zone d'accès de forme générale évasée s'élargissant dans le sens de l'éloignement de la zone de raccordement.

8. L'ensemble de la revendication 1, dans lequel le capot est monté de manière amovible sur le boîtier par une portion (27a) présentant une forme complémentaire de la forme d'une portion (27b) du boîtier dans un plan parallèle à une paroi principale du boîtier, ces portions respectives étant aptes à réaliser un assemblage mâle-femelle.

## Patentansprüche

1. Anschlusseinheit (9a-d) für Glasfasern, die enthält:
- ein Gehäuse (10a-d), das Einrichtungen zum Anschluss mindestens einer Glasfaser (FA1, FA2) enthält, die sich in einer optischen Anschlusszone (ZR) des Gehäuses befinden, und
- eine aufgesteckte Abdeckung (28), die entfernbar auf das Gehäuse montiert wird, wobei diese Abdeckung Einrichtungen zum Halt (74) der Glasfaser aufweist, die sich außerhalb des Gehäuses (10a-d) und außerhalb der Anschlusszone erstrecken, derart angeordnet, dass ein erster Abschnitt (T1) der Faser sich lokal gemäß einer ersten Richtung ausgehend von der Anschlusszone erstreckt und ein zweiter Abschnitt (T2) der Faser sich lokal gemäß einer zweiten Richtung anders als die erste Richtung erstreckt,
**dadurch gekennzeichnet, dass** die Halteeinrichtungen für jede Glasfaser enthalten:
- mindestens ein distales Halteelement (75a, 75b), das einen Haken (75a1, 75b1) für den Rückhalt der Glasfaser enthält, und
- mindestens ein Zwischenhalteelement (76a1, 76a2, 76b1, 76b2), das zwischen die Anschlusszone (ZR) und das distale Element (75a, 75b) eingefügt und in der Lage ist, die Faser zum distalen Halteelement zu führen, damit das distale und das Zwischenhaltelement die Faser auf dem zweiten Faserabschnitt, der sich zwischen den Halteeinrichtungen und der Anschlusszone erstreckt, gegen eine mögliche Beanspruchung der Faser isolieren, die außerhalb des Abschnitts erzeugt wird, wodurch vermieden wird, dass die Beanspruchung der Faser auf die Anschlusszone übertragen wird.

2. Einheit nach Anspruch 1, wobei die Abdeckung eine Hauptwand (28a) und mindestens eine Faserauflagewand (28b1, 28b2) enthält, die nicht zur Hauptwand parallel ist.

3. Einheit nach Anspruch 2, wobei der Faserrückhaltehaken des distalen Haltelements ein freies Ende (75a1, 75b1) enthält, das zur Innenseite der Hauptwand der Abdeckung gerichtet ist, um zwischen diesem freien Ende und der Hauptwand der Abdeckung einen Raum freizulassen, der es ermöglicht, die Faser in die vom Haken geformte Aufnahme einzuführen.

4. Einheit nach Anspruch 2, wobei die Faserauflagewand die Form eines zylindrischen Mantellinienabschnitts lotrecht zur Hauptwand und so gekrümmt hat, dass jeder Faser ein Krümmungsradius größer als ein vorbestimmter Krümmungsradius verliehen wird.

5. Einheit nach Anspruch 4, die zwei symmetrische Faserauflagewände enthält, die sich bis zu den Rändern einer Aussparung (29) der Hauptwand erstrecken.

6. Einheit nach Anspruch 1, wobei die Zwischenhalteelemente Paare von Klötzchen enthalten, die bezüglich der Abdeckung vorstehen und bezüglich der Mittelebene (ML) des Gehäuses symmetrisch sind, mit:
- ersten Klötzchen (76b1, 76b2), die im Bereich der Mittelebene zusammentreffen und bezüglich dieser Mittelebene geneigt sind, indem sie sich dieser Ebene in Richtung der Entfernung von der Anschlusszone annähern, und
- zweiten Klötzchen (76a1, 76a2), die zu beiden Seiten der ersten Klötzchen angeordnet und bezüglich der Mittelebene geneigt sind, indem sie sich von dieser Ebene in Richtung der Entfernung von der Anschlusszone entfernen.

7. Einheit nach Anspruch 1, wobei das Gehäuse für den Zugang von außerhalb des Gehäuses zur optischen Anschlusszone eine Zugangszone von allgemein ausgeweiteter Form aufweist, die sich in Richtung der Entfernung von der Anschlusszone verbreitert.

8. Einheit nach Anspruch 1, wobei die Abdeckung durch einen Abschnitt (27a) entfernbar auf das Gehäuse montiert wird, der eine zur Form eines Abschnitts (27b) des Gehäuses komplementäre Form in einer Ebene parallel zu einer Hauptwand des Gehäuses aufweist, wobei diese jeweiligen Abschnitte einen Stecker-Buchse-Zusammenbau realisieren können.

## Claims

1. An optical fibre connection unit (9a-d), comprising:
- a casing (10a-d), comprising means for the connection of at least one optical fibre (FA1, FA2) located in an optical connection zone (ZR) of the casing, and
- an added cap (28), removably mounted on the casing, this cap including means (74) for holding the optical fibre, extending out of the casing (10a-d) and out of the connection zone, arranged so that a first section (T1) of the fibre extends locally according to a first direction from the connection zone and a second section (T2) of the fibre extends locally according to a second direction, different from the first direction,
**characterized in that** the holding means comprise for each optical fibre:
- at least one distal holding element (75a, 75b) comprising a hook (75a1, 75b1) for retaining the optical fibre, and
- at least one intermediate holding element (76a1, 76a2, 76b1, 76b2), interposed between the connection zone (ZR) and the distal element (75a, 75b), adapted to guide the fibre towards the distal holding element,
so that the distal and intermediate bearing elements isolate the fibres, on said second fibre section extending between the holding means and the connection zone, relative to a possible stress of the fibre generated outside this section, hence avoiding that the stress of the fibre is transmitted to the connection zone.

2. The unit of claim 1, wherein the cap includes a main wall (28a) and at least one fibre bearing wall (28b1, 28b2), non-parallel to the main wall.

3. The unit of claim 2, wherein the fibre retaining hook of the distal holding element comprises a free end (75a1, 75b1) directed towards the inner face of the main wall of the cap, so as to provide between this free end and the main wall of the cap a space allowing to introduce the fibre into the housing formed by the hook.

4. The unit of claim 2, wherein the fibre bearing wall has the shape of a cylindrical portion of generating line perpendicular to the main wall and curved so as to provide each fibre with a greater radius of curvature than a predetermined radius of curvature.

5. The unit of claim 4, comprising two symmetrical fibre bearing walls extending up to the respective edges of a notch (29) in the main wall.

6. The unit of claim 1, wherein the intermediate holding elements comprise pairs of studs protruding with respect to the cap and symmetrical with respect to the median plan (ML) of the casing, with:
- first studs (76b1, 76b2), crossing each other at the level of the median plan and inclined with respect to this median plan by moving closer to this plan as they move away from the connection zone, and
- second studs (76a1, 76a2), arranged on either side of the first studs, and inclined with respect to the median plan by moving away from this plan as they move away from the connection zone.

7. The unit of claim 1, wherein the casing includes, to accede from the outside of the casing to the optical connexion zone, an access zone having a generally flared shape, widening as it moves away from the connection zone.

8. The unit of claim 1, wherein the cap is removably mounted on the casing by a portion (27a) having a shape complementary of that of a portion (27b) of the casing in a plane parallel to a main wall of the casing, these respective portions being adapted to realize a male-female assembly.
